Europäisches Patentamt

European Patent Office

Office européen des brevets

(11) Publication number: **0 278 921**
A2

# EUROPEAN PATENT APPLICATION

(21) Application number: 88830041.5

(22) Date of filing: 03.02.88

(51) Int. Cl.⁴: **B 29 C 33/30**
//B29L31:50

(30) Priority: 06.02.87 IT 1928987

(43) Date of publication of application:
17.08.88 Bulletin 88/33

(84) Designated Contracting States:
AT BE CH DE ES FR GB GR LI LU NL SE

(71) Applicant: OIMA S.p.A.
Via Feltrina Sud, 172
I-31044 Montebelluna Treviso (IT)

(72) Inventor: Olivieri, Oliviero
Via Monte Pelmo 14
I-31044 Montebelluna Treviso (IT)

(74) Representative: Vannini, Torquato et al
JACOBACCI-CASETTA & PERANI S.p.A. 7 Via Visconti di
Modrone
I-20122 Milan (IT)

(54) A plastics article molding press incorporating a die exchange device.

(57) To provide for quick exchange of the dies on a ski boot molding press, the use of plural die holders (11) is disclosed which are fitted by quick coupling means to a square turret head (8) carried pivotally on the press itself.

Fig-2

EP 0 278 921 A2

## Description

This invention relates to a press for molding plastics articles, which is particularly but not exclusively intended for molding footwear articles such as ski boots and the like.

The molding press to which this invention relates is of a type which comprises a pair of superimposed plate-like dies supported on plural pillars, with at least one of said dies being movable along said pillars toward and away from the other of said dies to close and open the die pair, and at least one mold movable from a molding position whereat it is located between the closed dies to a shake-out position away from said open dies.

Throughout the ensuing description and the appended claims, by the term "mold" a male pattern is meant which has the same shape as a footwear article to be molded.

In the instance of ski boots and the like molding, known design presses have employed dies which form, when in their closed condition, two cavities corresponding to the right-hand and left-hand fitting boot in a boot pair, respectively; first and second mold pairs are secured cantilever-fashion removably on opposed sides of one and the same die holder. The die holder is carried pivotally on one press pillar to which it is mounted such that while one mold pair are in a molding position between the closed dies, the other mold pair would be in the position for shaking out the articles (boots, ski boots, and the like) being molded thereon.

The molds can be positioned adjustably on the die holders for locking aligned to and in registry with their respective die cavities.

When on completion of a molding cycle the dies are to be changed to complete a fresh cycle, it has been conventional in the art to first disassemble the molds occupying their shake-out positions from the die holder to replace them with new molds which are then set coarsely (i.e. not finely adjusted) in position. Thereafter, the dies are opened and the molds, that at the end of the cycle were enclosed therebetween, are brought to their shake-out positions, emptied of the articles molded thereon and removed from the die holder. Simultaneously therewith, the dies are removed from the press and taken out. New dies are installed on the press and new molds are placed between the dies and finely brought to registry. The dies are next closed onto these new molds and pre-heated.

In the meantime, another new pair of molds are mounted to the die holder and adjusted coarsely. The final position of this second mold pair on the die holder is only adjusted finely on their being located between between the opened dies.

It may be appreciated that the above-described operations (removal of used dies, installation of new ones, coarse and fine setting of the new molds between the opened dies) that a "die exchange" involves, albeit not difficult to carry out, are laborious, should be performed with considerable accuracy and require therefore a long time during which the press has to be kept inoperative.

It should be noted that this downtime is further aggravated by the need to pre-heat the dies in their mounted condition on the press.

A substantial reduction, if not complete elimination, in the downtime brought about by the current die exchange procedure on molding presses of the type under consideration forms the problem that underlies this invention.

This problem is solved, according to the invention, by that the press comprises a fast-action mold exchange device including a turret head mounted pivotally to said one pillar and being displaceable slidingly therealong, at least one die holder for said at least one mold, means on said turret head and counter-means on said die holder of mutual registering and substantially quick coupling together.

By having a plurality of die holders stored with each holder pre-fitted with a respective mold (or mold pair in the instance of footwear article molding) in a finely adjusted position, the "die exchange" step is reduced to a simple operation of uncoupling a used die holder and coupling a new appropriate die holder from/to the turret head. Such an operation can be so quickly and easily performed as not to interfere substantially with the press working cycle, thereby reducing substantially the downtime affecting heretofore the working cycles of conventional presses.

The features and advantages of the invention will be more clearly understood from the following detailed description of an exemplary embodiment of an inventive press, given herein with reference to the accompanying illustrative and non-limitative drawings, where:

Figures 1 to 4 show in perspective a press according to the invention at successive stages of its operation;

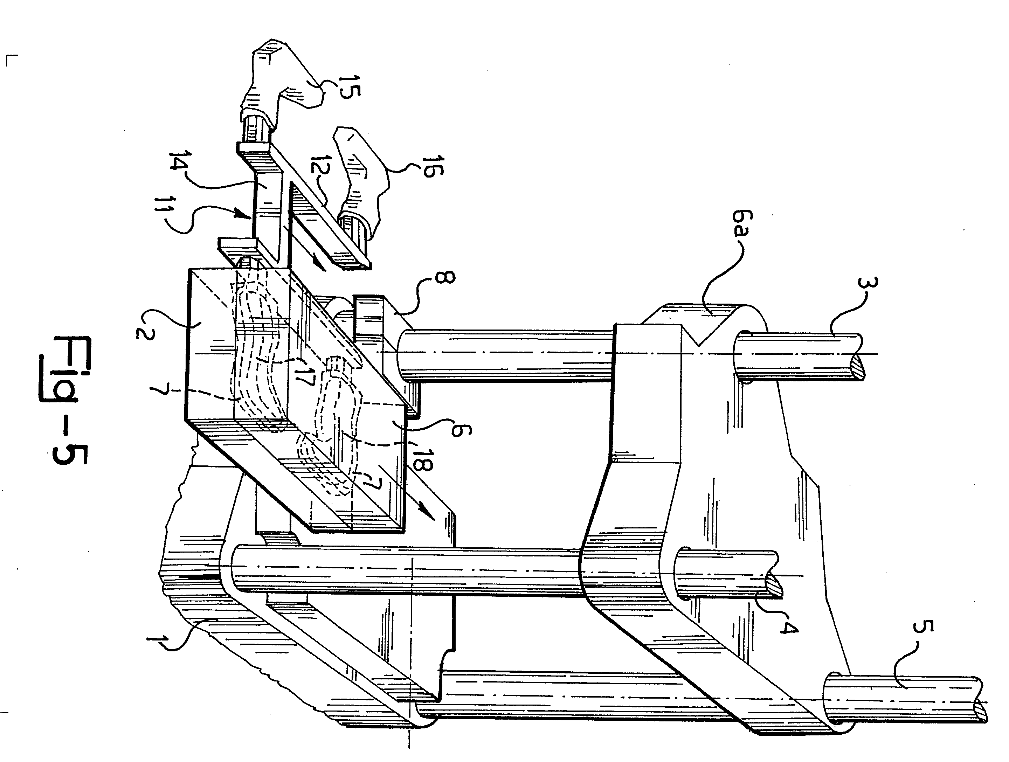

Figure 5 shows schematically in perspective the same press as in the preceding figures on the occasion of a quick exchange of the die holder;

Figures 6 and 7 show in plan view and elevation view, respectively, enlarged scale details of the construction of a press according to the invention.

With reference to the drawing figures, a molding press is shown therein for molding plastics footwear articles, in particular ski boot shells, denoted by the reference character S.

In essence and quite schematically, such a press comprises a bed 1 on which a plate-like die 2 is secured removably in a manner known per se and no further illustrated, and three identical, vertically extending, cylindrical pillars 3, 4, 5 located at the apices of an equilateral triangle. These pillars provide support and slideways for a plate 6a to which a second die 6 is secured in a conventional manner no further illustrated.

A conventional drive means, not shown, is provided to displace the die 6 toward and away from the underlying die 2, thereby providing the closed die and opened die positions in the press working cycle.

The dies 2 and 6 are formed with respective impressions, collectively indicated at 7 (in the Figures, only those of the die 2 are visible), which with the dies in the closed position form respective cavities shaped to a desired pattern of a footwear article to be produced.

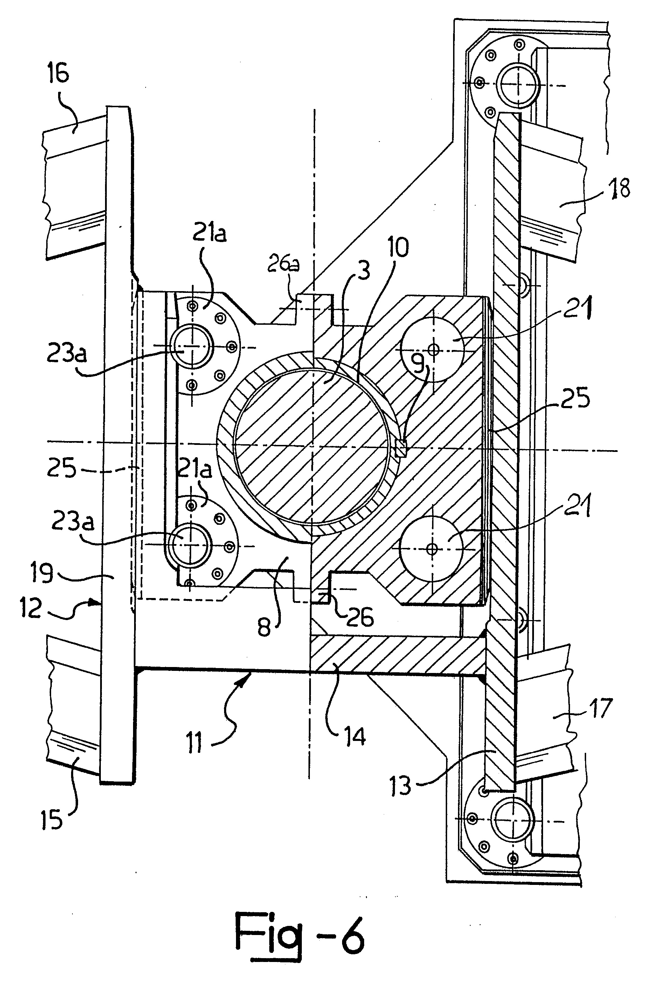

At a location included between the dies 2 and 6, there is mounted on the pillar 3 a turret head 8 of square shape. More specifically (Figure 6), the turret head 8 is made rigid rotatively, as by means of a key 9, with a power driven tube 10 mounted rotatively on the pillar 3 coaxially therewith and being slidable along the pillar.

Generally designated 11 is a die holder which comprises two identical, stiffened and parallel rods 12, 13 held apart, in the vicinity of one end thereof, by a cross-piece 14 imparting an essentially U-shaped configuration to the die holder 11 as a whole.

The distance separating the rods 12 and 13 is equal to the length of the side of the square turret head 8 on which the die holder 11 shall have to be mounted in a manner to be described.

The rods 12 and 13 of the die holder 11 are provided with a means of mounting respective mold pairs 15, 16 and 17, 18, having volumes and shapes adapted for cooperation with the cavities formed by the dies 2 and 6, adjustably in position to mold desired footwear articles.

The above-noted means of adjustably mounting the molds are conventional in design and accordingly, no further illustrated because foreign to this invention.

Along one side of the rods 12, 13 of the die holder 11 there are attached, such as by welding, respective strips 19, 20 which impart on each of said rods an inverted L-like cross-sectional shape with the short leg facing inwards of the die holder.

In the vicinities of the edges of the turret head 8, there are formed cylindrical cavities 21 in fluid communication with a source of a pressurized fluid, e.g. an oil; with reference to Figure 7, a small piston 22 is movable within each of said cylindrical cavities 21 whose rod 23 has a hammerhead-shaped end 23a standing proud of the top contour of a respective one of the cylindrical cavities 21 and being closed by disk-like covers 21a.

Belleville springs 24 are arranged to act on the small pistons 22 which hold said pistons 22 in a normally depressed position.

The opposite sides of the turret head 8 adapted for association with the rods 12 and 13 have outer walls suitably coated with a friction-reducing material as indicated at 25.

For coupling or mounting a die holder 11 to the turret head 8, the following procedure applies.

By supplying oil under pressure into the cylindrical cavities 21, the small pistons 22 are lifted against the Belleville springs 24, thus raising the hammerhead ends 23a.

By inserting the L-shaped rods 12 and 13 of one die holder 11 slidingly on the opposite sides of the turret head 8, the coupling thereof to said die holder is presently accomplished. The insertion is carried on until the cross-piece 14 contacts a respective abutment 26 (or 26a) formed on the turret head 8. At that point, the pressure is released from the cylindrical cavities 21, and on the pistons 22 there now prevails the action of the Belleville springs 24. The hammerhead ends 23a, on resuming their original positions, will lock the strips 19 and 20 (and hence the die holder 11) to the turret head 8.

A plurality of die holders 11 quite identical of the one described hereinabove are stored in a die magazine and each of them will be provided with respective mold pairs, with one of said pairs already enclosed between two dies and the other adjusted finely to an exact position between two more dies.

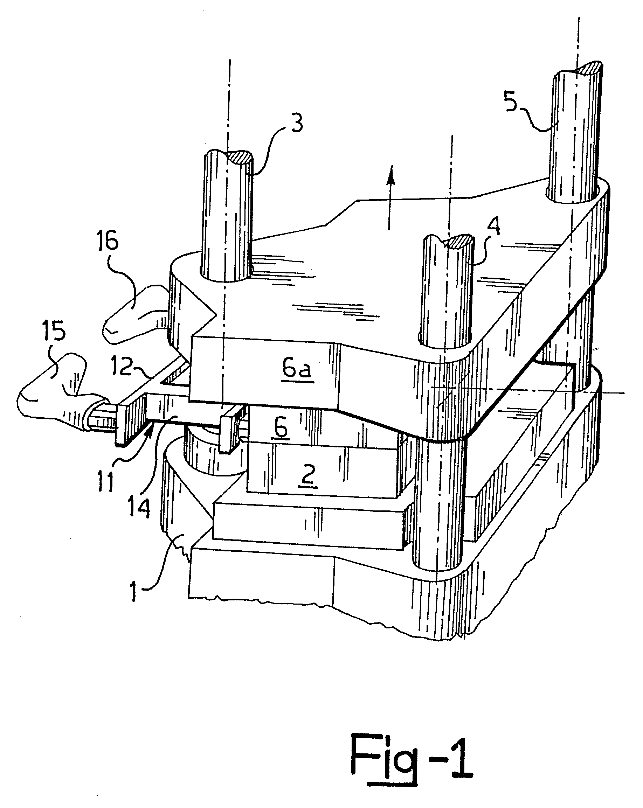

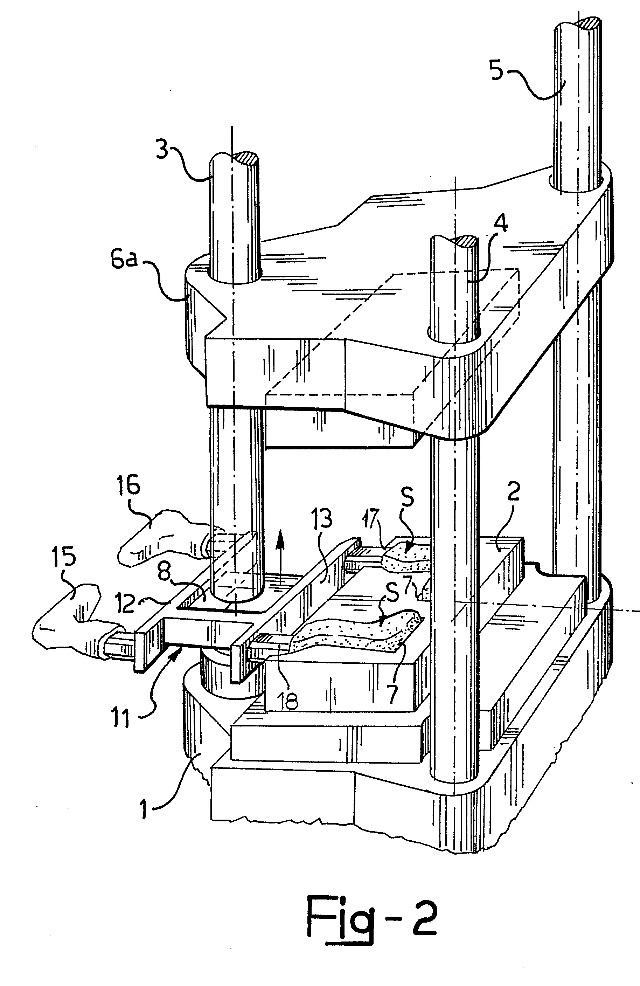

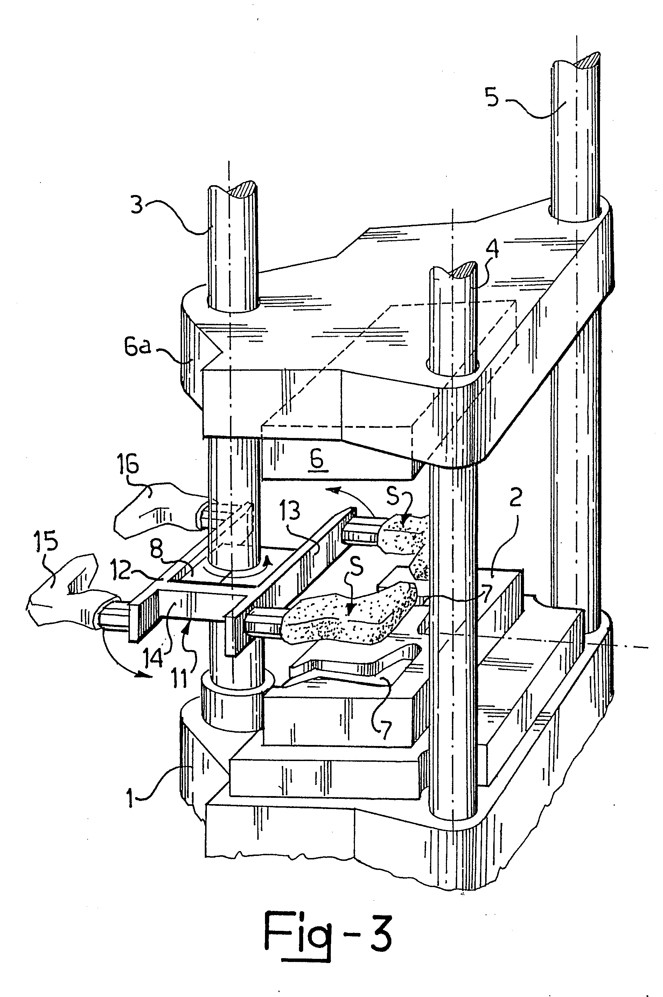

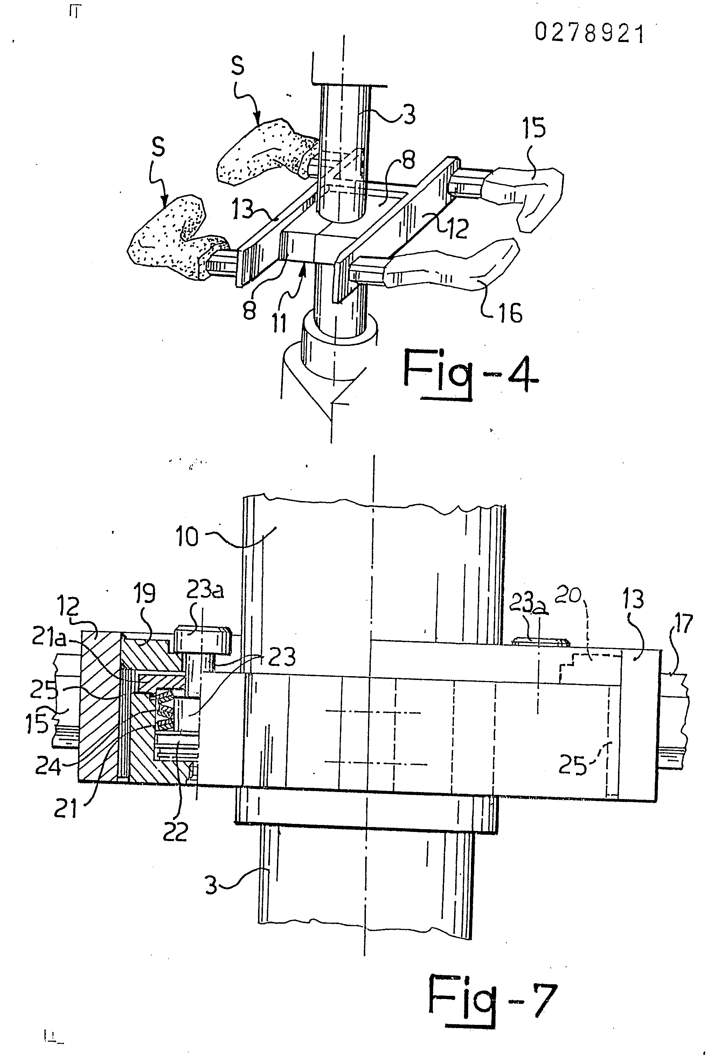

Once a first die holder 11 (inclusive of the molds and dies) has been mounted or fitted to the turret head 8 of the press of this invention, the molding cycle can be started. With reference to Figures 1 to 4, the dies 2 and 6 are set on the press in their closed condition with a first mold pair locked in a registered position within their cavities (Figure 1). On completion of the molding step, the (upper) die 6 is raised (Figure 2), and the turret head 8 is next raised which entrains the die holder 11 along with it (Figure 3). As a result, the first-mentioned mold pair are drawn out of the lower die 2. The turret head 8 is then imparted an angular displacement through 180° and the molds, on which the articles S have been molded, are brought to the shake-out position, while at the same time, the other mold pair is positioned between the open dies 2 and 6. The turret head 8 is moved back down such that the new mold pair can can locate themselves inside the cavities 7 of the die 2. The die 6 is then brought down to the closed die position. The molding cycle is repeated while at the same time completing the shaking out of the first pair of molded articles S.

When at the end of a working cycle, the dies are to be changed to start a fresh working cycle of the press, the following procedure is adhered to.

From a possible die holder magazine, a new die holder 11 is picked up complete with respective mold pairs one of which is enclosed between a pair of dies. This die holder is brought to a point close to the press and subjected to a preheating step.

By raising the small pistons 22, the die holder 11 so far at work on the press is released from the turret head 8, and can be withdrawn therefrom by any conventional means to entrain the last pair of molded articles and the closed dies along with it. On the turret head 8 being so cleared, the new die holder 11 is fitted thereon in a substantially cartridge-like fashion. The rods 12 and 13 will engage slidingly with the opposite sides of the turret 8 until the cross-piece 14 strikes the abutment 26 formed on the head.

At this point, the pressure to the cylindrical cavities 21 is released, thereby there will prevail on the pistons 22 the action of the Belleville springs 24, and the hammerhead ends 23 lock the new die holder. In essence, the fitting provided between the die holder 11 and the turret 8 is of the quick coupling kind with exact positioning features of the positive mechanical abutment or detent type.

Simultaneously therewith, the dies are secured by conventional means on the press already in their working positions, thereby a fresh production cycle can be initiated.

That the dies can be changed on the inventive press in a rapid and straightforward manner is quite apparent from the foregoing description and illustration. In addition, the consequent time saving is improved by the ability to carry out the die pre-heating step externally of the press.

It should be pointed out that the description has been given hereinabove with reference to a non-limitative example of how the invention can be embodied. Actually, numerous alterations may be introduced without departing from the scope of this invention. Thus, for instance, the die holders 11 may have different constructions, and different constructions may also have the indexing and quick coupling means which ensure precise interfit of the turret head 8 and each of a plurality of die holders.

**Claims**

1. A press for molding plastics articles such as ski boot shells and the like, comprising a pair of superimposed plate-like dies (2,6) supported on plural pillars (3,4,5), with at least one (6) of said dies being movable along said pillars toward and away from the other (2) of said dies to close and open the die pair, and at least one mold (15,16,17,18) movable from a molding position whereat it is located between the closed dies (2,6) to a shake-out position away from said open dies (2,6), characterized in that it comprises a fast-action die exchange device (2,6,15,16,17,18) including a turret head (8) mounted pivotally to said one pillar (3) and being displaceable slidingly therealong, at least one die holder (11) for said at least one mold (15,16,17,18), means (16) on said turret head (8) and counter-means (14) on said die holder (11) of mutual registering and substantially quick coupling together.

2. A press according to Claim 1, characterized in that said turret head (8) is square.

3. A press according to Claim 2, characterized in that said die holder (11) comprises two identical, stiffened and parallel, rods (12,13) held apart, in the vicinities of one end thereof, by a cross-piece (14) adapted to impart an essentially U-shaped configuration on said die holder (11), the distance separating said rods (12,13) being equal to the length of the side of the square turret head (8).

4. A press according to Claim 3, characterized in that said turret head (8) is provided with an abutment (26,26a) cooperating with the cross-piece (14) of said die holder (11) wherefor it forms a positive detent effective to position said die holder (11) exactly on said turret head (8).

5. A press according to Claim 3, characterized in that said turret head (8) has opposite sides with an anti-friction coating (25) adapted for sliding engagement by the rods (12,13) of said die holder.

0278921

Fig-1

Fig-2

Fig-3

Fig-4

Fig-7

0278921

Fig-5

Fig-6

0278921